# EUROPÄISCHE PATENTSCHRIFT

(11) **EP 0 395 866 B1**
(45) Veröffentlichungstag und Bekanntmachung des Hinweises auf die Patenterteilung: **26.05.1993**
(21) Anmeldenummer: 90105081.5
(22) Anmeldetag: 17.03.1990
(51) Int. Cl.: A47J 31/00, A47J 31/057, A47J 31/46

(54) **Kaffee- oder Teemaschine**
Appliance for brewing coffee or tea
Machine à préparer du café ou du thé

(30) Priorität: 03.05.1989 DE 3914605; 09.02.1990 DE 4003916
(43) Veröffentlichungstag der Anmeldung: 07.11.1990
(73) Patentinhaber: Melitta Haushaltsprodukte GmbH & Co. Kommanditgesellschaft, D-32371 Minden (DE)
(72) Erfinder: Salomon, Thomas, D-4815 Schloss Holte (DE); Slomka, Hans-Jürgen, D-4950 Minden (DE)
(74) Vertreter: Stracke, Alexander, Dipl.-Ing.

(56) Entgegenhaltungen:
- EP-A- 0 274 561
- DE-A- 2 733 487
- DE-U- 8 708 082
- GB-A- 793 944

## Beschreibung

Die Erfindung betrifft eine Kaffee- oder Teemaschine mit einem mittels eines Saughebers periodisch entleerbaren, mit einem Entlüftungsrohr versehenen und ansonsten bis auf einen Wasserzulauf allseitig geschlossenen Zwischenbehälter für das Brühwasser.

Kaffee- oder Teemaschinen der vorerwähnten Art sind an sich bekannt (DE 36 43 878 C2).

Der mittels des Saughebers periodisch entleerbare Zwischenbehälter dient dazu, zunächst einmal eine vorbestimmte Menge erhitzten Brühwasser zu sammeln und dieses dann relativ schnell bzw. schwallartig in das unterhalb des Zwischenbehälters befindliche Filtergefäß zu fördern.

Das Entlüftungsrohr dient dazu, den bis auf den Wasserzulauf ansonsten vollständig geschlossenen Zwischenbehälter entlüften und damit sicher entleeren zu können.

Sofern bei einem letzten Brühintervall nur noch eine teilweise Füllung des Zwischenbehälters mit Brühwasser erfolgt, sorgt der nachströmende Wasserdampf trotzdem für ein Entleeren des Zwischenbehälters, da bei entsprechender Querschnittsgestaltung des Entlüftungsrohres der entstehende Druck im Zwischenbehälter gewährleistet, daß auch bei einer nur teilweisen Füllung die Überlaufkante des Saughebers vom Brühwasser überschritten werden kann.

Es hat sich gezeigt, daß die Grundkonzeption derartiger Kaffee- oder Teemaschinen durchaus funktionsfähig ist. Gewisse Schwierigkeiten ergeben sich aber bei der exakten Abstimmung aller Komponenten des Zwischenbehälters im Bezug darauf, daß die Wirksamkeit des Saughebers unter allen Betriebsbedingungen eingehalten wird.

Der Erfindung liegt die Aufgabe zugrunde, eine Kaffee -oder Teemaschine der gattungsgemäßen Art so zu gestalten, daß mit vergleichsweise einfachen und preiswerten Mitteln die Betriebssicherheit der Saugheberfunktion des Zwischenbehälters verbessert wird.

Diese Aufgabe wird erfindungsgemäß dadurch gelöst, daß das Entlüftungsrohr in eine im Inneren des Zwischenbehälters durch Wandungen begrenzte, nach unten offene Kammer einmündet und daß die untere Begrenzungsebene dieser Kammer unterhalb der Überlaufkante des Saughebers liegt.

Diese Maßnahme bewirkt, daß ab dem Augenblick, in dem der Wasserstand im Zwischenbehälter die untere Begrenzungsebene der Kammer erreicht hat, eine Entlüftung des Zwischenbehälters nicht mehr stattfinden kann.

Durch weitere Förderung von Brühwasser in den Zwischenbehälter, die einhergeht mit der Förderung von Dampfblasen in den Zwischenbehälter, stellt sich im Zwischenbehälter ein erhöhter Druck ein, der das im Zwischenbehälter befindliche Brühwasser gewissermaßen schlagartig über die Überlaufkante des Saughebers drückt. Der Ablauf des Saughebers wird augenblicklich mit einer geschlossenen Wassersäule gefüllt, so daß ein Abreißen des nachfließenden Wassers und damit ein Unwirksamwerden des Saughebers sicher vermieden ist.

Eine besonders zweckmäßige Ausführungsform der Erfindung sieht vor, daß das Entlüftungsrohr eine Vielzahl von sehr kleinen Entlüftungsbohrungen aufweist.

Diese Maßnahme bewirkt, daß eine ausreichende Entlüftungs-Querschnittsfläche vorhanden ist und für den Fall, daß bei einem letzten Brühintervall nur noch eine teilweise Füllung des Zwischenbehälters mit Brühwasser erfolgt, dem nachströmenden Wasserdampf ein erhöhter Strömungswiderstand entgegengesetzt wird, so daß in diesem Falle ein schneller und wirksamer Druckanstieg im Zwischenbehälter erzielt wird.

Dabei wird die Tatsache ausgenutzt, daß der Strömungswiderstand bei einer Vielzahl von vergleichsweise kleinen Entlüftungsbohrungen im Vergleich zu einer einzigen, im Querschnitt etwa gleichen Entlüftungsbohrung in Abhängigkeit von den Strömungsgeschwindigkeiten beträchtlich ansteigt.

Weiterbildungen des Zwischenbehälters nach der Erfindung sind Gegenstand weiterer Unteransprüche.

In den beigefügten Zeichnungen sind Ausführungsbeispiele der Erfindung dargestellt, die im folgenden näher beschrieben werden. Es zeigen:
- Fig. 1: eine schematisch dargestellte Kaffee- oder Teemaschine mit einem im Schnitt gezeigten Zwischenbehälter für das Brühwasser
- Fig. 2: einen Querschnitt durch ein Entlüftungsrohr eines Zwischenbehälters einer Kaffee- oder Teemaschine nach einem weiteren Ausführungsbeispiel der Erfindung
- Fig. 3: eine Ansicht eines Zwischenbehälters einer Kaffee- oder Teemaschine nach einem weiteren Ausführungsbeispiel der Erfindung
- Fig. 4: einen Schnitt durch den Zwischenbehälter gemäß Fig. 3
- Fig. 5: einen Schnitt nach der Linie V-V in Fig. 4
- Fig. 6: eine teilweise im Schnitt dargestellte Ansicht eines Zwischenbehälters nach einem weiteren Ausführungsbeispiel der Erfindung.

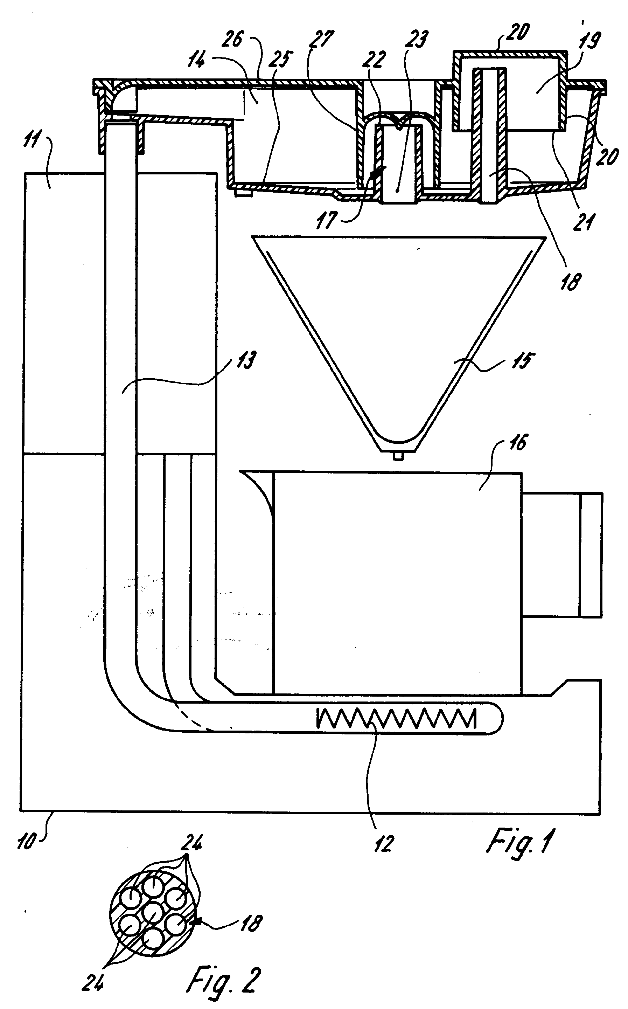

Die in Fig. 1 gezeigte Kaffee- oder Teemaschine 10 weist einen Frischwasserbehälter 11, einen Durchlauferhitzer 12, ein Steigrohr 13 und einen Zwischenbehälter 14 auf, in den das Steigrohr 13 einmündet. Unterhalb des Zwischenbehälters 14, der weiter unten noch ausführlich beschrieben wird, ist ein Filtergefäß 15 und unterhalb dieses Filtergefäßes 15 ein Aufnahmebehälter 16 zur Aufnahme von Aromaauszügen aus Kaffee oder Tee angeordnet.

Der Zwischenbehälter 14 ist mit einem Saugheber 17 versehen und über diesen Saugheber 17 periodisch entleerbar.

Der Zwischenbehälter 14 ist außerdem mit einem Entlüftungsrohr 18 ausgestattet und ansonsten bis auf den Wasserzulauf, d.h., den Übergangsbereich zwischen Steigrohr 13 und Zwischenbehälter 14, allseitig geschlossen.

Wie Fig. 1 anschaulich zeigt, mündet das Entlüftungsrohr 18 in eine Kammer 19 ein, die sich außerhalb des Bereiches des Saughebers 17 befindet und die durch Wandungen 20 begrenzt ist. Es wird weiterhin deutlich, daß diese Kammer 19 ausschließlich zu ihrer Unterseite hin offen ist. Die untere Begrenzungsebene 21 der Kammer 19 liegt darüber hinaus unterhalb der Überlaufkante 22 des Saughebers 17.

Dies bedeutet, daß bei Erreichen eines Wasserstandes im Zwischenbehälter 14 bis zur Höhe der unteren Begrenzungsebene 21 der Kammer 19 eine Entlüftung des Zwischenbehälters 14 stattfinden kann, bei Überschreiten dieses Wasserstandes hingegen wird eine Entlüftung unterbunden, da nunmehr die Kammer 19 gegenüber dem übrigen Innenraum des Zwischenbehälters 14 geschlossen ist. Dies bedeutet, daß sich bei weiterer Wasserförderung in den Zwischenbehälter 14, die einhergeht mit einem Dampfeintritt in diesen Zwischenbehälter 14, sehr rasch ein Druckanstieg einstellt, der dazu führt, daß das im Zwischenbehälter 14 bevorratete Wasser in den Saugheber 17 hineingedrückt wird. Dies erfolgt gewissermaßen schlagartig, d.h., daß der Saugheberauslauf 23 sofort voll mit Wasser gefüllt wird, so daß die Gefahr des Abreißens des nachfließenden Wassers nicht mehr besteht und die Wirksamkeit des Saughebers 17 insgesamt verbessert wird.

Fig. 2 zeigt, daß das Entlüftungsrohr 18 des Zwischenbehälters 14 auch mit einer Vielzahl von sehr kleinen Entlüftungsbohrungen 24 versehen sein kann. Dies bringt den Vorteil mitsich, daß zwar zur notwendigen Entlüftung des Zwischenbehälters 14 eine genügend große Querschnittsfläche für den Luftaustritt vorhanden ist, daß aber im Falle des Eintrittes von Wasserdampf in den Zwischenbehälter, insbesondere bei einem letzten Brühintervall, der Druckanstieg im Inneren des Zwischenbehälters 14 äußerst schnell erfolgt, da die Geschwindigkeit des einströmenden Wasserdampfes erheblich höher liegt als die Strömungsgeschwindigkeit der Luft beim Entlüften des Zwischenbehälters 14, da der Strömungswiderstand dieser vergleichsweise kleinen Entlüftungsbohrungen 24 im Vergleich zu einer einzigen, im Querschnitt etwa gleichen Entlüftungsbohrung in Abhängigkeit von den Strömungsgeschwindigkeiten beträchtlich ansteigt.

Vorteilhafterweise ist der Zwischenbehälter 14 insgesamt aus lediglich zwei Bauteilen hergestellt, und zwar aus einem Behälterunterteil und einem Deckel 26. Behälterunterteil 25 und Deckel 26 sind vorzugsweise aus Kunststoff hergestellt und miteinander verschweißt oder verklebt.

An das Behälterunterteil 25 ist der Saugheberauslauf 23 und das Entlüftungsrohr 18 angeformt, am Deckel 26 sind die Wandungen 20 der Kammer 19 und die Absaugglocke 27 des Saughebers 17 angeformt.

Der Zwischenbehälter 14 mit seinen Funktionsteilen wie Saugheber 17, Entlüftungsrohr 18 und Kammer 19 ist demzufolge äußerst preiswert und einfach herstellbar. Gleichzeitig wird die Funktion des Saughebers 17 durch die beschriebenen Maßnahmen verbessert, insbesondere auch im Hinblick auf die Entleerung von Restwassermengen, die sich bei einem letzten Brühzyklus ergeben können.

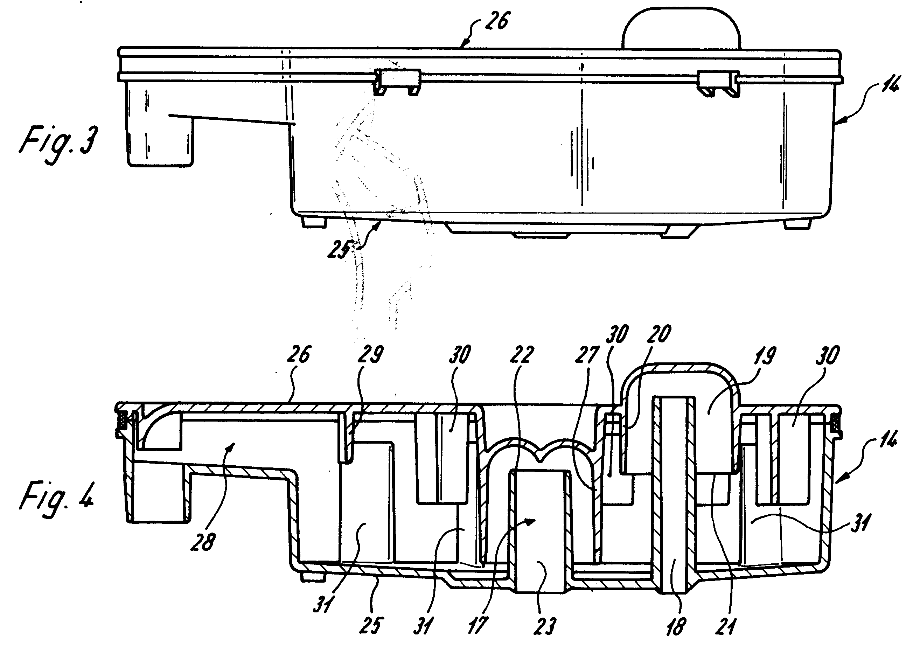

Der in den Fig. 3 bis 5 dargestellte Zwischenbehälter 14 weist grundsätzlich den gleichen Aufbau auf wie der Zwischenbehälter 14, der in Fig. 1 gezeigt ist. Insofern sind für gleiche Bauteile auch gleiche Bezugszeichen verwendet worden.

Abweichend vom Ausführungsbeispiel nach Fig. 1 ist der Zwischenbehälter 14 gemäß den Fig. 3 bis 5 im Übergangsbereich zwischen dem Frischwasserzulauf 28 und dem eigentlichen Wasser-Sammelraum mit einem am Deckel 26 angeformten und nach unten ragenden Prallsteg 29 versehen. Dieser Prallsteg 29 bewirkt einen relativ ruhigen Einlauf des Brühwassers in den Sammelraum des Zwischenbehälters 14. Es ist bekannt, daß Durchlauferhitzer von Kaffee- oder Teemaschinen zu einer intermetierenden Wasserförderung neigen, so daß entsprechend der Einlauf des Brühwassers in den Zwischenbehälter 14 diskontinuierlich erfolgt und somit eine Wellenbewegung des Brühwassers erzeugt wird. Dieser Wellenbewegung wird durch den Prallsteg 29 im Übergangsbereich zwischen Wasserzulauf 28 und Sammelraum entgegengewirkt.

Eine weitere Beruhigung des Wassers im Sammelraum des Zwischenbehälter 14 wird erreicht wurd eine Vielzahl von Beruhigungsstegen 30 bzw. 31, die wechselweise am Deckel 26 und am Behälterunterteil 25 angeformt sind und sich in den Innenraum des Sammelbehälters 14 erstrecken. Dabei ragen die am Deckel 26 angeformten Beruhigungsstege 30 erheblich weiter in den Innenraum des Zwischenbehälters 14 hinein als die Wandungen 20, welche die Kammer 19 begrenzen. Die am Behälterunterteil 25 angeformten Beruhigungsstege 31 erstrecken sich in ihrer Höhe hingegen beträchtlich über die untere Begrenzungsebene 21 der Kammer 19 hinaus nach oben.

Die am Deckel 26 sowie am Behälterunterteil 25 angeformten Beruhigungsstege 30 bzw. 31 sind insgesamt so angeordnet, daß die durch den diskontinuierlichen Verlauf der Wasserförderung verursachte Wellenbewegung praktisch vollkommen beruhigt bzw. ausgeglichen wird, so daß der angestrebte Abschluß der Kammer 19 bei Anstieg des Wasserstandes bis zur unteren Begrenzungsebene 21 auch bei sehr unruhigem Brühwasserzufluß gewährleistet ist. Somit ist die Funktion dieses Abschlusses der Kammer 19 - erwünschter Druckanstieg durch Verhinderung der Entlüftung - auch bei sehr unruhiger Wasserförderung durch einen Durchlauferhitzer gewährleistet.

Diesem Ziel kommt entgegen, daß die Kammer 19, in die das Entlüftungsrohr 18 einmündet, in dem dem Wasserzulauf 28 abgewandten Bereich des Zwischenbehälters 14 angeordnet ist.

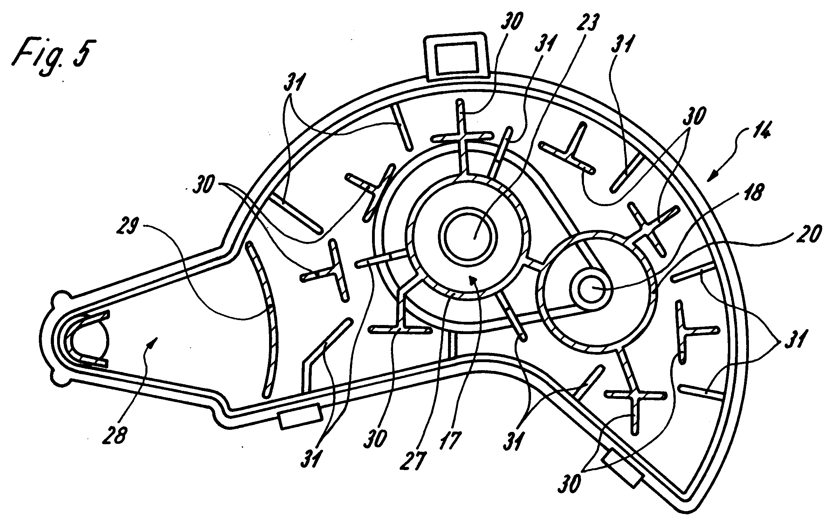

Wie insbesondere Fig. 5 deutlich zeigt, sind die am Deckel 26 angeformten Beruhigungsstege 30 T-förmig profiliert, während es sich bei den am Behälterunterteil 25 angeformten Beruhigungsstege 31 um einfache Flachstege handelt. Durch die Anordnung der Beruhigungsstege 30 und 31 wird insgesamt ein Labyrinth geschaffen, welches eine optimale Beruhigung des einfließenden Brühwassers bewirkt.

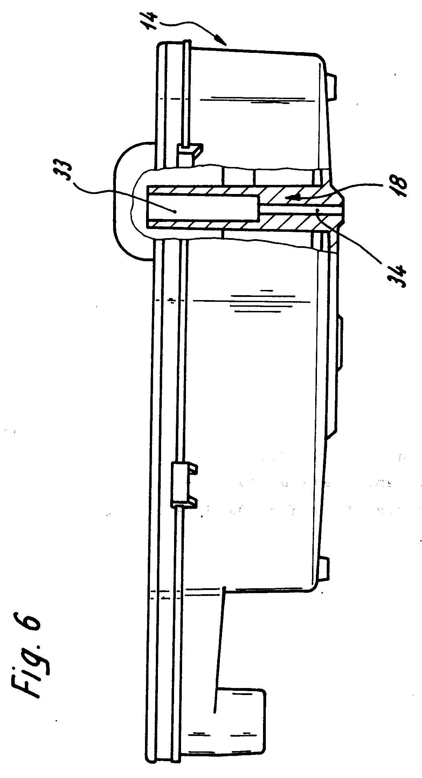

In Fig. 6 ist ein Zwischenbehälter 14 einer Kaffee- oder Teemaschine gezeigt, bei dem das Entlüftungsrohr 18 eine Stufenbohrung aufweist, wobei der in den Zwischenbehälter 14 unmittelbar einmündende Bohrungsabschnitt 33 den größeren Durchmesser aufweist als der aus dem Zwischenbehälter 14 herausführende Bohrungsabschnitt 34. Strömungstechnisch wirkt diese Stufenbohrung wie eine Blende. Im Übergangsbereich zwischen den beiden unterschiedlich großen Bohrungsabschnitten 33 und 34 findet im Falle des Eintrittes von Wasserdampf in den Zwischenbehälter 14, insbesondere bei einem letzten Brühintervall, aufgrund der relativ hohen Strömungsgeschwindigkeit des Wasserdampfes eine Verwirbelung statt, die eine scheinbare Querschnittsverengung des ohnehin einen kleineren Durchmesser aufweisenden Bohrungsabschnittes 34 bewirkt, so daß sich wieder ein rascher Druckanstieg im Inneren des Zwischenbehälters 14 ergibt.

## Patentansprüche

1. Kaffee- oder Teemaschine mit einem mittels eines Saughebers periodisch entleerbaren, mit einem Entlüftungsrohr versehenen und ansonsten bis auf einen Wasserzulauf allseitig geschlossenen Zwischenbehälter,
**dadurch gekennzeichnet,** daß das Entlüftungsrohr (18) in eine im Inneren des Zwischenbehälters durch Wandungen (20) begrenzte, nach unten offene Kammer (19) einmündet und daß die untere Begrenzungsebene (21) dieser Kammer (19) unterhalb der Überlaufkante (22) des Saughebers (17) liegt.

2. Kaffee- oder Teemaschine nach Anspruch 1, dadurch gekennzeichnet, daß das Entlüftungsrohr (18) eine Vielzahl von sehr kleinen Entlüftungsbohrungen (24) aufweist.

3. Kaffee- oder Teemaschine nach Anspruch 1, dadurch gekennzeichnet, daß das Entlüftungsrohr (18) eine Stufenbohrung aufweist, wobei der in den Zwischenbehälter (14) einmündende Bohrungsabschnitt (33) einen größeren Durchmesser aufweist als der aus dem Zwischenbehälter (14) austretende Bohrungsabschnitt (34).

4. Kaffee- oder Teemaschine nach Anspruch 1, 2 oder 3, dadurch gekennzeichnet, daß der Zwischenbehälter (14) aus einem einstückig gefertigten Behälterunterteil (25) sowie aus einem ebenfalls einstückigen Deckelteil (26) besteht, wobei an das Behälterunterteil (25) der Saugheberauslauf (23) und das Entlüftungsrohr (18) und an das Deckelteil (26) eine über den Saugheberauslauf (23) gestülpte Absaugglocke (27) sowie die Wandungen (20) der Kammer (19) angeformt sind.

5. Kaffee- oder Teemaschine nach Anspruch 4, dadurch gekennzeichnet, daß das Behälterunterteil (25) und das Deckelteil (26) aus Kunststoff gefertigt sind.

6. Kaffee- oder Teemaschine nach Anspruch 4 oder 5, dadurch gekennzeichnet, daß Behälterunterteil (25) und Deckelteil (26) miteinander verklebt oder verschweißt sind.

7. Kaffee- oder Teemaschine nach einem oder mehreren der Ansprüche 1 bis 6, dadurch gekennzeichnet, daß im Übergangsbereich zwischen dem Wasserzulauf (28) und dem Wasser-Sammelraum des Zwischenbehälters (14) ein am Deckelteil (26) angeformter, nach unten ragender Prallsteg (29) vorgesehen ist.

8. Kaffee- oder Teemaschine nach einem oder mehreren der Ansprüche 1 bis 7, dadurch gekennzeichnet, daß im Bereich des Wasser-Sammelraumes des Zwischenbehälters (14) am Behälterunterteil (25) und/oder am Deckelteil (26) Beruhigungsstege (31,30) angeformt sind, die sich nach oben und/oder nach unten über die untere Begrenzungsebene (21) der Kammer (19) hinaus erstrecken.

9. Kaffee- oder Teemaschine nach Anspruch 8, dadurch gekennzeichnet, daß die am Deckelteil (26) angeformten Beruhigungsstege (30) im Querschnitt T-förmig profiliert sind.

10. Kaffee- oder Teemaschine nach einem oder mehreren der Ansprüche 7 bis 9, dadurch gekennzeichnet, daß die am Behälterunterteil (25) angeformten Beruhigungsstege (31) als Flachstege ausgebildet sind.

11. Kaffee- oder Teemaschine nach einem oder mehreren der Ansprüche 1 bis 10, dadurch gekennzeichnet, daß das Entlüftungsrohr (18) und die Kammer (19) in einem dem Wasserzulauf (28) abgewandten Bereich des Zwischenbehälters (14) angeordnet sind.

## Claims

1. Coffee or tea machine with an intermediate container which is periodically emptiable by means of a siphon, is provided with a ventilating pipe and otherwise closed on all sides apart from a water feed, characterised thereby that the ventilating pipe (18) opens into a downwardly open chamber (19) bounded by walls (20) in the interior of the intermediate container and that the lower boundary plane (21) of this chamber (19) lies below the overflow edge (22) of the siphon (17).

2. Coffee or tea machine according to claim 1, characterised thereby that the ventilating pipe (18) has a plurality of very small ventilation bores (24).

3. Coffee or tea machine according to claim 1, characterised thereby that the ventilating pipe (18) has a stepped bore, wherein the bore portion (33) opening into the intermediate container (14) has a larger diameter than the bore portion (34) issuing from the intermediate container (14).

4. Coffee or tea machine according to claim 1, 2 or 3, characterised thereby that the intermediate container (14) consists of an integrally constructed container lower part (25) as well as of a likewise integral cover part (26), wherein the siphon outlet (23) and the ventilating pipe (18) are moulded on at the container lower part (25) and a suction bell (27), which is inserted over the siphon (23), as well as the walls (20) of the chamber (19) are moulded on at the cover part (20).

5. Coffee or tea machine according to claim 4, characterised thereby that the container lower part (25) and the cover part (26) are made of synthetic material.

6. Coffee or tea machine according to claim 4 or 5, characterised thereby that the container lower part (25) and cover part (26) are glued or welded together.

7. Coffee or tea machine according to one or more of claims 1 to 6, characterised thereby that a downwardly projecting baffle web (29) moulded on at the cover part (26) is provided in the transition region between the water feed (28) and the water collecting space of the intermediate container (14).

8. Coffee or tea machine according to one of more of claims 1 to 7, characterised thereby that steadying webs (31, 30), which extend out upwardly and/or downwardly beyond the lower boundary plane (21) of the chamber (19), are moulded on at the container lower part (25) and/or at the cover part (26) in the region of the water collecting space of the intermediate container (14).

9. Coffee or tea machine according to claim 8 characterised thereby that the steadying webs (30) moulded on at the cover part (26) are profiled to be T-shaped in cross-section.

10. Coffee or tea machine according to one or more of claims 7 to 9, characterised thereby that the steadying webs (31) moulded on at the container lower part (25) are constructed as flat webs.

11. Coffee or tea machine according to one or more of claims 1 to 10, characterised thereby that the ventilating pipe (18) and the chamber (19) are arranged in a region of the intermediate container (14) remote from the water feed (28).

## Revendications

1. Machine à café ou à thé comportant un réservoir intermédiaire qui est muni d'un tube purgeur et qui, à l'exception de l'arrivée d'eau, est fermé de tout côté, ce réservoir étant vidé périodiquement par un siphon, machine caractérisée en ce que le tube purgeur (18) débouche dans une chambre (19) ouverte en bas, qui est délimitée par une paroi (20) à l'intérieur du réservoir intermédiaire (14) et en ce que le plan limite inférieur (21) de cette chambre (19) se situe sous l'arête de débordement (22) du siphon (17).

2. Machine à café ou à thé selon la revendication 1, caractérisée en ce que le tube purgeur (18) comporte un grand nombre de très petits perçages de purge (24).

3. Machine à café ou à thé selon la revendication 1, caractérisée en ce que le tube purgeur (18) comporte un perçage à gradin, la partie de perçage (34) débouchant dans le réservoir intermédiaire (14) ayant un diamètre plus grand que la partie de perçage (34) sortant du réservoir intermédiaire (14).

4. Machine à café ou à thé selon les revendications 1, 2, 3, caractérisée en ce que le réservoir intermédiaire (14) se compose d'une partie inférieure (25) en une seule pièce et d'une partie formant couvercle (26) également en une seule pièce, et sur la partie inférieure (25) du réservoir sont formés la sortie (23) du siphon et le tube purgeur (18), alors que sur la partie de couvercle (26) sont formées une cloche d'aspiration (27) recouvrant la sortie (23) du siphon ainsi que les parois (20) de la chambre (19).

5. Machine à café ou à thé selon la revendication 4, caractérisée en ce que la partie inférieure (25) du réservoir et la partie (26) de couvercle, sont fabriquées en matière plastique.

6. Machine à café ou à thé selon la revendication 4 ou 5, caractérisée en ce que la partie inférieure (25) du réservoir et la partie de couvercle (26) sont reliées l'une à l'autre par collage ou soudage.

7. Machine à café ou à thé selon l'une ou plusieurs des revendications 1 à 6, caractérisée en ce qu'à la jonction entre l'arrivée d'eau (28) et la chambre collectrice d'eau du réservoir intermédiaire (14) il est prévu une cloison brise-jet (29) formée sur la partie de couvercle (26) et venant en saillie vers le bas.

8. Machine à café ou à thé selon l'une ou plusieurs des revendications 1 à 7, caractérisée en ce qu'au niveau de la chambre collectrice d'eau du réservoir intermédiaire (14), des entretoises chicanes (31, 30) sont formées sur la partie inférieure (25) du réservoir et/ou sur la partie de couvercle (26), ces entretoises s'étendant vers le haut et/ou vers le bas par-dessus le plan limite inférieur (21) de la chambre (19).

9. Machine à café ou à thé selon la revendication 8, caractérisée en ce que les entretoises chicanes (30) formées sur la partie de couvercle (26) ont une section en forme de T.

10. Machine à café ou à thé selon l'une ou plusieurs des revendications 7 à 9, caractérisée en ce que les entretoises chicanes (31) formées sur la partie inférieure (25) du réservoir, sont en forme d'entretoises plates.

11. Machine à café ou à thé selon l'une ou plusieurs des revendications 1 à 10, caractérisé en ce que le tube purgeur (18) et la chambre (19) se trouvent dans une zone du réservoir intermédiaire (14) éloignée de l'arrivée d'eau (28).
